# EUROPÄISCHE PATENTANMELDUNG

(11) **EP 4 245 900 A2**
(43) Veröffentlichungstag der Anmeldung: **20.09.2023**
(21) Anmeldenummer: 23183196.7
(22) Anmeldetag: 05.10.2020
(51) Int. Cl.: D01H 13/16

(54) **VORRICHTUNG ZUR HERSTELLUNG EINES FADENS AUS EINEM GARN**

(62) Teilanmeldung aus: 20200002.2
(71) Anmelder: RAFI GmbH & Co. KG, 88276 Berg (DE)
(72) Erfinder: Heine, Martin, 72820 Sonnenbühl (DE); Meinusch, Kilian, 88255 Baindt (DE); Grimm, Michael, 88213 Ravensburg (DE)
(74) Vertreter: Christ, Niko

(57) **Zusammenfassung**

Die vorliegende Erfindung soll einen einfachen und kostengünstigen elektrischen Schaltkreis vorschlagen, der zur Detektion von elektrisch leitfähigen Gegenständen, etwa zur Erkennung des Umlaufs eingesetzt werden kann.

Dies gelingt, indem der zu detektierende Gegenstand als Modulator und ein Transistor als Demodulator in einem Schaltkreis wirkt, welcher im Wesentlichen aus einem Rückkopplungs-Oszillator besteht.

## Beschreibung

Die vorliegende Erfindung betrifft einen Elektrischer Schaltkreis zur Detektion von elektrisch leitfähigen Gegenständen, bestehend aus mindestens zwei bestromten Spulen mit mindestens einer Wicklung, die durch den Schaltkreis mit einer konstanten Frequenz angeregt sind, aus mindestens einem in dem Schaltkreis angeordneten Transistor und aus einem mit der jeweiligen Spule des Schaltkreises elektrisch verbundenen externen elektrischen Gerät, durch das das Schwingverhalten den Spulen gemessen ist.

Durch die EP 2 826 899 B1 ist eine weitere Ringspinnmaschine mit einer Ringbank bekannt geworden, an der Spinnringe angeordnet sind. Die Spinnringe bilden mit dem Bewegungselement eine Ringspinnstelle, an der aus einem Garn ein Faden hergestellt und mit einem rotationssymmetrischen Körper verbunden ist. Der rotationssymmetrische Körper ist beispielsweise über einen Riemenantrieb um die eigene Längsachse in Rotation versetzt, sodass der Faden auf dem Körper aufgewickelt ist. Die jeweiligen Bewegungselemente in Form der Spinnringe rotieren dabei um die Längsachse des Körpers, sodass sich die Fäden gegenseitig nicht behindern. Das Bewegungselement ist folglich von dem Faden bewegt und damit in Rotation versetzt.

Die Rotationen der Bewegungselemente sind permanent zu überwachen, um gegebenenfalls Störungen frühzeitig zu erkennen und die Ringspinnmaschine abzuschalten, bevor eine komplexe Verknotung der jeweiligen Fäden entsteht. Mithilfe eines Mikrofons ist dabei die Rotation des Betätigungselementes festgestellt. Durch das Mikrofon werden elektrische Signale beim Durchlaufen des Bewegungselementes generiert, die an eine Platine weitergeleitet sind. An der Platine sind visuelle Anzeigemittel derart positioniert, dass diese von außen erkennbar sind.

Eine Art der Metalldetektion ist durch die EP 0 816 870 B1 bekannt geworden. Durch diesen Metalldetektor sollen Metalle in Böden, Wänden oder dgl. erfasst sein. Dabei handelt es sich um die stationäre oder örtliche Bestimmung von Leitungen in Hauswänden bzw. von Metallen im Untergrund. Ein Oszillator generiert dazu sinusförmige Wechselfelder, die in den vorhandenen hinteren Bereich ausgestrahlt werden, durch die ein metallischer Gegenstand geführt ist. Durch das Eintauchen des Gegenstandes aus einem elektrisch leitfähigen Werkstoff verändern sich die Magnetfelder. Solche Veränderungen der Magnetfelder sind messbar und können demnach ausgewertet werden.

Bei beiden bekannt gewordenen Vorrichtungen bzw. Verfahren für den Betrieb eines Metalldetektors hat sich nachteiliger Weise herausgestellt, dass diese zum einen einen sehr komplexen konstruktiven Aufbau aufweisen und zum anderen in ihrer jeweiligen Herstellung sehr kostenintensiv sind, da eine Vielzahl von hochwertigen elektronischen Komponenten zu verwenden sind.

Es ist daher Aufgabe der Erfindung, eine Vorrichtung der Eingangs genannten Gattungen derart weiterzubilden, dass diese sowohl zuverlässig und langfristig störungsfrei arbeitet und zudem in der Herstellung wesentlich günstiger zu bauen ist als die bekannt gewordenen Vorrichtungen.

Diese Aufgabe ist erfindungsgemäß durch die Merkmale des kennzeichnenden Teils von Patentanspruch 1, wie auch durch den kennzeichnenden Teil des Anspruchs 4 gelöst.

Weitere vorteilhafte Weiterbildungen der Erfindung ergeben sich aus den Unteransprüchen.

Dadurch, dass an dem Ringflansch mindestens zwei bestimmte Spulen mit jeweils mindestens zwei Wicklungen angeordnet sind, dass die Spulen mit einem elektrischen Schaltkreis gekoppelt sind, durch den die Spulen mit einer konstanten Frequenz angeregt sind, und dass das Bewegungselement aus einem elektrisch leitfähigen Werkstoff hergestellt ist und im Bereich der Spulen eine Amplitudenveränderung bewerkstelligt, die in dem elektrischen Schaltkreis ausgewertet und an ein externes elektrisches Gerät weitergeleitet ist, entstehen permanente Messungen, durch die die Bewegungen oder Rotationen des Bewegungselementes zuverlässig erfasst sind und durch die möglicherweise auftretenden Veränderungen der Umgebungstemperatur, der Luftfeuchtigkeit oder sonstige Umwelteinflüsse, durch die das Schwingverhalten der Spule beeinflusst ist, unverzüglich mittels des elektrischen Schaltkreises bzw. des externen elektrischen Gerätes kompensiert sind.

Die verwendeten elektrischen Komponenten sind als Standardmassenware kostengünstig zu erwerben, sodass der derart gebildete Schaltkreis mit geringen Betriebsmitteln gebaut werden kann. Die Herstellungskosten zur Auswertung des Rotationsverhaltens des Bewegungselementes sind daher äußerst gering gehalten.

Zudem können die bereits bestehenden Ringspinnmaschinen mit solchen Spulen und Schaltkreisen nachträglich ausgestattet werden, da diese als nachrüstbarer Bausatz zur Verfügung gestellt werden kann.

Ferner liefert der elektrische Schaltkreis eindeutige Meßsignale, um Störungen im Betriebsablauf der Ringspinnmaschine zu erkennen und diese durch frühzeitige Eingriffsmöglichkeiten möglichst gering zu halten.

Mittels des erfindungsgemäßen Schaltkreises und dem damit elektrisch gekoppelten externen elektrischen Gerät können zudem das Schwingverhalten der Spule kalibriert sein und gegebenenfalls Veränderungen der Umgebung, beispielsweise Temperatur-und/oder Luftfeuchtigkeitsveränderungen, ausgeglichen sein, da die den elektrischen Schaltkreis bildenden elektronischen Komponenten derart zusammengeschaltet sind, dass Veränderungen des Schwingverhaltens der Spule unverzüglich erfasst und an das externe elektrische Gerät weitergeleitet sind. Durch das elektrische externe Gerät können in entsprechender Weise Korrekturen des Arbeitspunktes mit variabler Gleichspannung vorgenommen werden, um das Schwingverhalten der Spule an die Veränderungen der Umgebung anzupassen, also konstant zu halten.

In der Zeichnung ist ein erfindungsgemäßes Ausführungsbeispiel dargestellt, dass nachfolgend näher erläutert ist. Im Einzelnen zeigt:
- Figur 1: einen schematischen konstruktiven Aufbau einer Ringspinnmaschine, durch die aus einem aufgefaserten Garn ein Faden hergestellt ist, mit einem das Garn aufnehmenden Vorratsbehälter, mit einer dem Vorratsbehälter nachgeordneten Führungseinrichtung, durch die das Garn in Richtung der Ringspinnmaschine ausgerichtet ist, mit einem rotationssymmetrischen Körper auf den der Faden aufgewickelt ist, und mit einer Antriebseinrichtung, durch die der Körper um die eigene Längsachse rotierend angetrieben ist,
- Figur 2: ein vergrößerter Ausschnitt der Ringspinnmaschine gemäß Figur 1, dem ein Ringflansch zugeordnet ist, der den rotationssymmetrischen Körper ummantelt und in den eine Führungsbahn eingearbeitet ist, in die ein Bewegungselement, in dem eine Öffnung zur Aufnahme des Fadens vorgesehen ist, beweglich gelagert ist, und mit zwei an der Außenseite der Führungsbahn vorgesehenen Spulen, die über eine elektrische Kopplung mit einem Schaltkreis elektrisch gekoppelt ist, durch den die Spulen mit einer konstanten Frequenz angeregt sind,
- Figur 3: ein Spannung-Zeit-Diagramm, durch das eine Amplitudenerhöhung dargestellt ist, während das Bewegungselement gemäß Figuren 1 und 2 im Bereich der Spule vorbeiläuft,
- Figur 4: ein Spannung-Zeit-Diagramm basierend auf den Spannungsverläufen gemäß Figur 3 mit einer unterdrückten Hochfrequenz,
- Figur 5: ein Spannung-Zeit-Diagramm ausgehend von der Spannung gemäß Figur 4 nach dessen Verstärkung,
- Figur 6: ein konstruktiver Aufbau einer Leiterplatte als Bestandteil des elektrischen Schaltkreises gemäß den Figuren 1 und 2,
- Figur 7: eine erste Ausführungsvariante für einen analog arbeitenden Arbeitspunktregler als Bestandteil der elektrischen Schaltung gemäß den Figuren 1 und 2,
- Figur 8: eine zweite Ausführungsvariante eines teildigitalisierten Arbeitspunktreglers und Signalerfassung für den Schaltkreis gemäß den Figuren 1 und 2
- Figur 9: eine dritte Ausführungsvariante eines volldigitalisierten Arbeitspunktreglers. und der Signalerfassung für den Schaltkreis gemäß den Figuren 1 und 2,
- Figur 10: ein konstruktiver Aufbau eines Motherboards als Bestandteil der elektrischen Schaltung gemäß den Figuren 1 und 2 für den Betrieb mehrerer Spulen,
- Figur 11: einen schematischen Aufbau einer Schnittstelle für den Betrieb mehrerer Spulen durch den elektrischen Schaltkreis gemäß den Figuren 1 und 2, ausgeführt als Bus-System und
- Figur 12: die Zusammenschaltung von mehreren Schaltkreisen gemäß Figur 11 mit einer Schnittstelle an einem Motherboard.

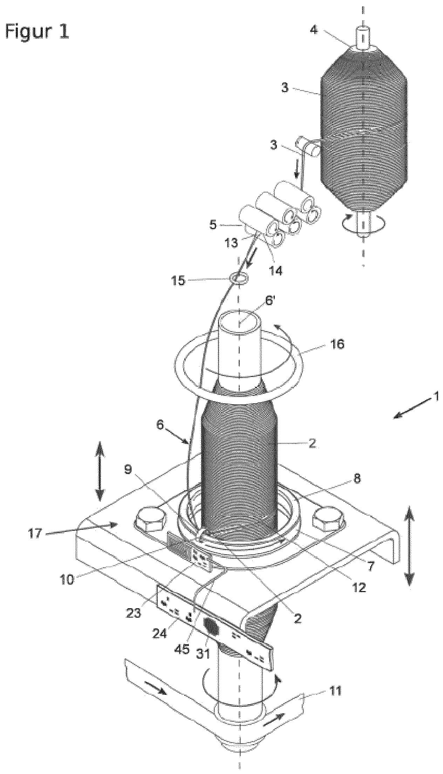

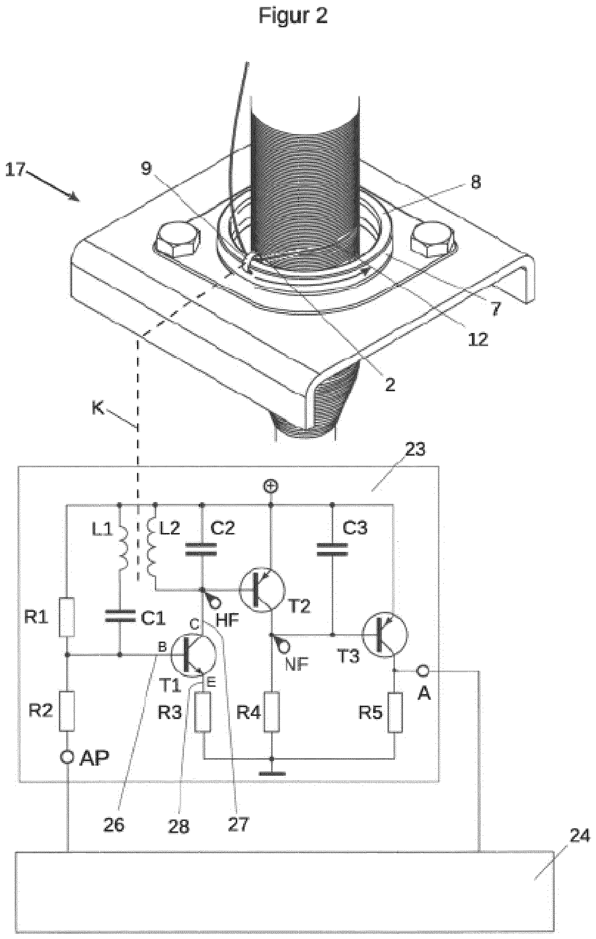

In den Figuren 1 und 2 ist eine Vorrichtung 1 zur Herstellung eines Fadens 2 aus einem Garn 3 zu entnehmen, die in der Fachterminologie auch als Ringspinnmaschine 1 bezeichnet ist.

Das Garn 3 weist als Ausgangsmaterial eine sehr aufgefaserte Oberflächenstruktur auf, die für weitere Bearbeitungsprozesse in der Textilindustrie nicht geeignet ist. Die Ringspinnmaschine 1 dient daher dazu, aus dem Garn 3 den Faden 2 mit einer möglichst homogenen oder glatten Oberflächenstruktur herzustellen. Zu diesem Zweck ist das Garn 3 als Endlosbahn in einem Vorratsbehälter 4 gelagert, der zu der Ringspinnmaschine 1 transportierbar ist. Durch die Ringspinnmaschine 1 wird das Garn 3 aus dem Vorratsbehälter 4 gefördert und durch Verdrillen ist die Oberflächenstruktur des Garnes 3 homogenisiert oder geglättet.

Dies ist dadurch bewerkstelligt, dass das Garn 3 zunächst von einer Führungsnut-Einrichtung 5 aufgenommen und in Richtung eines rotationssymmetrischen Körpers 6 transportiert ist. Um das Garn 3 optimal auszurichten, sind zum einen in der Führungseinrichtung 5 ein Spinndreieck 13 als Garnführung und räumlich nachfolgend zu dieser ein Ring 15 vorgesehen. Das Garn 3 ist durch den Ring 14 geführt. Somit bildet sowohl die Führungseinrichtung 5 als auch den Ring 14 eine Art Scharnier oder Drehgelenk, um das das Garn 3 gedrillt oder rotiert ist.

Das Ende des Fadens 2 ist an einer Befestigungsstelle 12 mit dem rotationssymmetrischen Körper 6 verbunden. Durch eine Antriebseinrichtung 11, beispielsweise ein Keilriemen, ist der Körper 6 um seine Längsachse in Rotation versetzt, sodass der mit dem Körper 6 verbundene Faden 2 auf der Mantelfläche des Körpers 6 der in der Fachterminologie auch als Ballon bezeichnet ist, aufgewickelt ist. Durch diesen Wickelprozess wirkt demnach eine Zugkraft auf den Faden 2 und das mit diesem verbundene Garn 3 ein, wodurch der Faden 2 und das Garn 3 aus dem Vorratsbehälter 4 in Richtung des Körpers 6 gezogen ist.

Um den Faden 2 nach Verlassen des Ringes 15 zu verdrillen und damit die möglichst homogene Oberflächenstruktur zu schaffen, ist der Faden 2 zur optimierten Führung durch eine ringförmige Fadenführung 16 gezogen, die räumlich gesehen oberhalb des Körpers 6 angeordnet ist. Beabstandet zu der Fadenführung 16 ist ein Ringflansch 7 zu verwenden, der eine um den Körper 6 umlaufende geschlossene Führungsbahn 8 aufweist. Die Führungsbahn 8 ist zu der Oberfläche des rotationssymmetrischen Körpers 6 beabstandet. In die Führungsbahn 8 ist ein Bewegungselement 9 beweglich gelagert eingesetzt. Das Bewegungselement 9 wird in der Fachterminologie oftmals auch als sogenannter Traveller oder Läufer bezeichnet.

In den gezeigten Ausführungsbeispielen ist das Bewegungselement 9 ringförmig ausgestaltet. Das Bewegungselement 9 weist demnach eine Öffnung 10 auf, durch die der Faden 2 geführt ist. Das Bewegungselement 9 ist im Ausgangszustand der Ringspinnmaschine auf dem identischen Niveau einer Befestigungsstelle 12 angeordnet, sodass die erste Wicklung des Fadens 2 auf dem Körper 6 in dieser Ebene verläuft. Sobald eine bestimmte Anzahl von Wicklungen auf dem Körper 6 erreicht ist, kann der Ringflansch 7 und damit das Bewegungselement 9 in Richtung der Fadenführung 16 verfahren werden, sodass sich die jeweils nachfolgenden Wicklungen des Fadens 2 auf der gesamten Oberfläche des Körpers 6 definiert ergeben.

Durch die Rotation des Körpers 6 und der damit verbundenen Rotationsbewegung des Fadens 2 entsteht eine von dem Faden 2 auf das Bewegungselement 9 ausgeübte Kraft, durch die das Bewegungselement 9 in der Führungsbahn 8 um die Längsachse des Körpers 6 in Rotation versetzt ist. Eine umgekehrte Aufwicklung des Fadens 2 ist dadurch möglich, dass das Bewegungselement 9 in der Führungsbahn 8 angetrieben ist, beispielsweise magnetisch oder induktiv, und der Körper 6 feststeht. Der Faden 2 ist somit durch das Bewegungselement 9 um die Mantelfläche des Körpers 6 gewickelt.

Die Rotationsbewegungen des Bewegungselementes 9 sollen durch mindestens zwei Spulen L1, L2 und einem elektrischen Schaltkreis 23 gemessen und an ein externes elektrisches Gerät 24 zur Steuerung der Spule L1, L2 und zur Auswertung der Rotationsbewegungen des Bewegungselementes 9 weitergeleitet sein.

Die Spulen L1, L2 weisen jeweils mindestens eine oder eine Vielzahl von Wicklungen 22 auf, welche von dem Schaltkreis 23 bzw. dem elektrischen externen Gerät 24 bestromt sind. Im gezeigten Ausführungsbeispiel bestehen die Spulen L1, L2 aus insgesamt 28 Wicklungen 22 bis 22²⁸ und sind unmittelbar im Nahbereich des Bewegungselementes 9, nämlich auf der Außenseite der Führungsbahn 8 angeordnet. Somit beeinflusst das Bewegungselement 9, dessen Werkstoff elektrisch leitfähig ist, das Schwingverhalten der Spulen L1, L2, und zwar sobald das Bewegungselement 9 in das von den Spulen L1, L2 abgestrahlte Magnetfeld eintritt bzw. dieses verlässt. Hierbei handelt es sich um eine Rückkopplung zwischen der ersten und zweiten Spule L1, L2.

Insbesondere aus Figur 2 ist ersichtlich, wie der elektrische Schaltkreis 23 aufgebaut ist bzw. aus welchen elektrischen Komponenten dieser gebildet ist und wie diese Komponenten zur Auswertung der Amplitudenveränderungen an den Spulen L1, L2, die als Sensor anzusehen sind, zu deren Kalibrierung und permanenter Einstellung zusammengeschaltet sind.

Im Wesentlichen besteht der Schaltkreis 23 aus einem LC-Oszillator L2, C2, T1 sowie R3, die mit einer induktiven Rückkopplung K über die zweite Spule L1, einem Demodulator T2, C3, R4 und einem Verstärker T3 und R5 elektrisch gekoppelt sind. Die erfindungswesentlichen elektrischen Komponenten und deren Zusammenschaltung sind nachfolgend detaillierter beschrieben. Bei der elektrischen Komponente T1 handelt es sich um den ersten Transistor. Dessen Basis, Kollektor und Ermittler sind mit den Bezugsziffern 26, 27 und 28 gekennzeichnet.

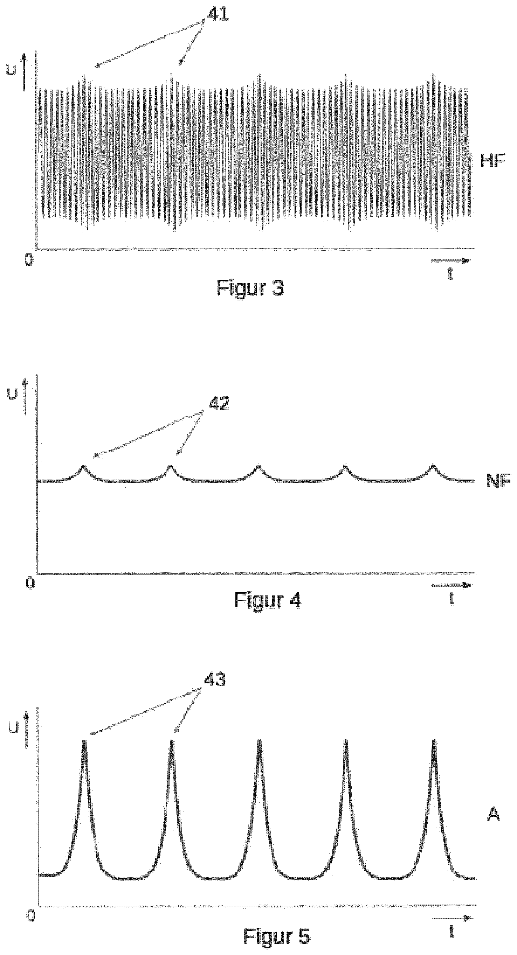

In dem Schaltkreis 23 der Figur 2 bilden L2 und C2 einen Parallelschwingkreis, der vom Transistor T1, und zwar an dessen Kollektor 27 angeregt ist. Zwischen der Spannungsversorgung, die symbolisch mit einem + gekennzeichnet ist, und der Basis 26 des Transistors T1 sind die zweite Spule L1 mit einem Koppelkondensator C1 angeordnet. Durch die Anordnung der Spulen L1 und L2 entsteht eine Rückkopplung K in Abhängigkeit des eingestellten Arbeitspunktes AP. Der Schaltkreis 23 schwingt. Die Präsenz des Bewegungselementes 9 im Nahbereich der Spulen L1 und L2 erhöhen demnach diese Kopplung K, sodass es zu einer Amplituden-Überhöhung gemäß Figur 3 kommt. Zur Stabilisierung des Oszillatorschaltungsteils ist der im Emitterwiderstand R3 zur Stromgegenkopplung vorgesehen.

Bei einer derartigen Amplitudenmodulation ist die Hochfrequenz HF durch die Rückkopplung K in ihrer Amplitude moduliert. Bei diesen erfindungsgemäßen Schaltkreis 23 erfolgt die Amplitudenmodulation durch das Bewegungselement 9 und dessen Rotationsbewegungen um die Längsachse 6`. Durch die Annäherung des Bewegungselementes 9 im Nahbereich der SpulenL1, L2 ist demnach die Hochfrequenz HF moduliert. Die Signalhöhen der Kurve NF der Figur 4 sind mit der Bezugsziffer 42 gekennzeichnet. Der Demodulator besteht aus dem Transistor T2 und dem Kondensator C3. Durch diese Zusammenschaltung entsteht die Kurve NF, die in Figur 4 dargestellt ist. Dabei ist die Hochfrequenz HF nicht mehr Bestandteil der dort abgebildeten Kurve NF.

Ausgehend von dem in Figur 4 abgebildeten Kurvenverlauf NF ist durch einen dritten Transistor T3 das Kurven-Signal NF derart verstärkt, dass ein höheres Signal- Rauschverhältnis entsteht und das Bewegungselement 9 in ein Sensorsignal 43 am Ausgang A weiterverarbeitet werden kann. Dies ist schematisch in Figur 5 abgebildet. Dabei bezieht sich SNR als Abkürzung auf Signal-to-Noise Ratio.

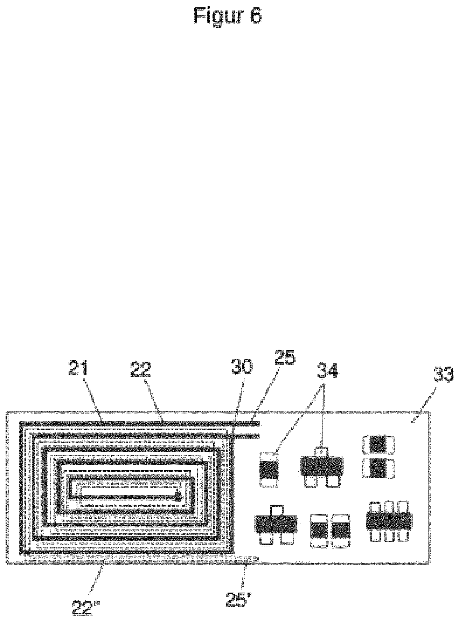

In Figur 6 ist der Aufbau einer Leiterplatte 33 für den Schaltkreis 23 und für den Betrieb der Spulen L1, L2 zu entnehmen. An einem Abgriff 30, der mit der ersten Wicklung 22 der Spulen L1, L2 elektrisch gekoppelt ist, sind die Bauteile 34 mit den Spulen L1, L2 elektrisch verbunden. Die Leiterplatte 33 weist eine Vielzahl von Leiterbahnen 34 auf die platzsparend in verschiedenen übereinander angeordneten Ebenen verlaufen. Es ist möglich, weitere elektrische Komponenten beispielsweise die den Demodulator bildenden Transistor und Spulenwiderstände in den verschiedenen Ebenen der Leiterplatte 33 anzuordnen.

Der Anfang der jeweiligen Spule L1, L2 ist mit der Bezugsziffer 25 und das Ende mit der Bezugsziffer 25` versehen.

Die Leiterplatte 33 bildet demnach mit den Spulen L1, L2 ein einschlägiges Bauteil, sodass der Abstand zwischen den Spulen L1, L2 und den die Amplitudenveränderungen messenden und verstärkenden elektrischen Komponenten möglichst mit einem sehr geringen räumlichen Abstand voneinander angeordnet sind.

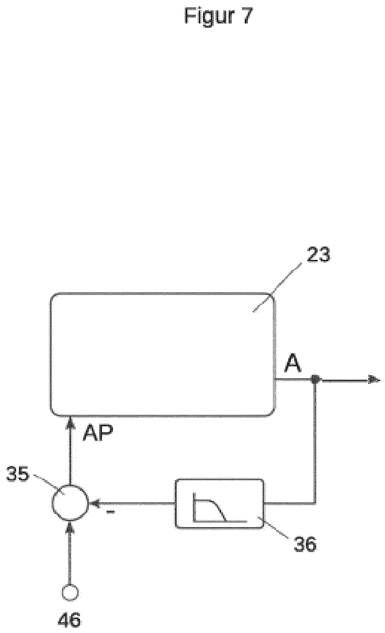

Aus Figur 7 ist die Einstellung eines analogen Arbeitspunktreglers ersichtlich. Über den Eingang AP kann der Arbeitspunkt des Oszillators mithilfe einer Gleichspannung gesteuert sein. Damit ist der Oszillator derart einstellbar, dass sich gerade so eine Rückkopplung einstellt und dieser zu schwingen beginnt, wie dies in Figur 3 abgebildet und erläutert ist. An diesem Arbeitspunkt AP ist der Schaltkreis 23 am empfindlichsten.

Damit der Schaltkreis 23 unabhängig von exakten Abständen, Temperatur- und/oder Luftfeuchtigkeitsveränderungen ist, kann der Arbeitspunkt AP programmiert und somit geregelt sein. Diese Programmiermöglichkeiten sind über einen bekannten analog-Regler - wie dies hinsichtlich Figur 6 erläutert ist - mit einem Operationsverstärker 35 als Regelorgan und Tiefpassfilter 36 durchführbar. Der optimale Arbeitspunkt AP ist über eine vorgegebene Gleichspannung als Führungsgröße programmierbar und somit einstellbar. Der Tiefpassfilter 36 ist erforderlich, da zur Regelung des Arbeitspunktes AP ausschließlich eine Gleichspannung ohne Einflüsse des elektrischen Schaltkreises 23 notwendig ist.

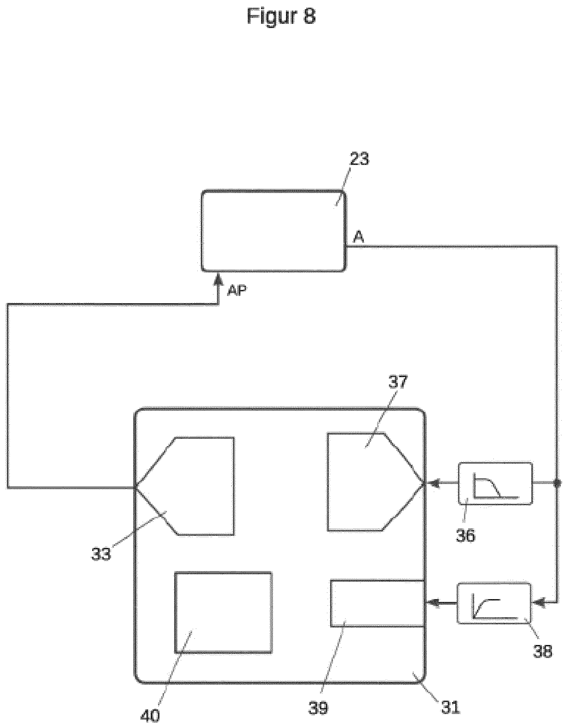

In Figur 8 ist ein teil-digitalisierter Arbeitspultregler und dessen Signalerfassung als Schaltbild dargestellt. Zur Kalibrierung des Schaltkreises 23 ist der Gleichspannungsanteil als Ausgangssignal A - wie dies in Figur 5 gezeigt ist - mit einem Tiefpassfilter 36 herausgefiltert und die Gleichspannung mit einem A/D-Konverter 37 in einem Mikrocontroller 31 abgetastet. Gleichzeitig ist die Spannung eines D/A-Ausgangs des Mikrocontrollers 31 variiert, der an der Arbeitspultsteuerung AP des Schaltkreises 23 angeschlossen ist. Sobald ein bestimmter Wert am A/D-Konverter 37 erreicht ist, ist der Variationsverlauf der Spannung des D/A-Ausgangs gestoppt. Der Schaltkreis 23 ist somit kalibriert.

Der Gleichspannungsanteil des Schaltkreissignals A gemäß Figur 5 ist mit einem Hochpassfilter 38 unterdrückt und mit den Impulsen, die von dem Bewegungselement 9 verursacht sind, ein Hardware-Interrupt 39 ausgelöst. Mit jedem Hardware-Interrupt 39 ist mithilfe von geeigneten Algorithmen, die im Mikrocontroller 31, das dem externen elektrischen Gerät 24 zugeordnet ist, der Zählerstand eines Meßorgans 40 abgelesen und das Meßorgan 40 anschließend wiederum auf null zurückgesetzt. Mithilfe des Zählerstandes ist durch einen weiteren Algorithmus die Geschwindigkeit oder die Umdrehungszahl pro Minute des Bewegungselementes 9 in der Führungsbahn 8 berechenbar.

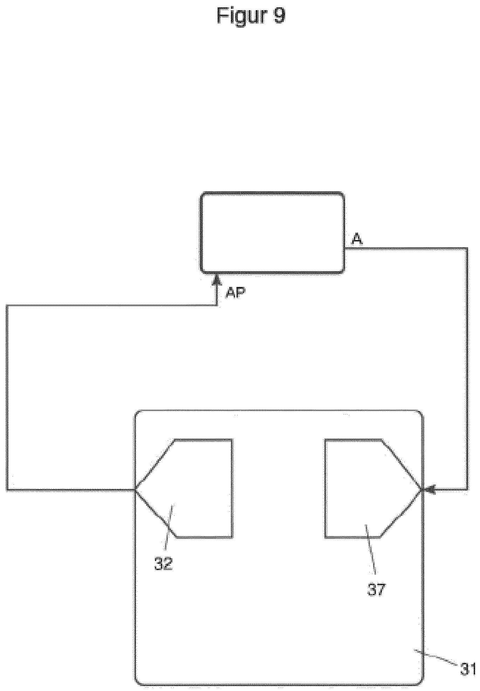

Aus Figur 9 ist ein Schaltbild zur voll-digitalisierten Arbeitspultregelung und dessen Signalerfassung via DSP zu entnehmen. Als Alternative zur teildigitalisierten Arbeitspultregulierung erläuterten Kalibrierung des elektrischen Schaltkreises 23 und der Signalerfassung des Bewegungselementes 9 ist ebenso eine der bestimmten Mikrocontroller 31 integrierter digitale Signalverarbeitung DSP verwendbar. Dabei ist das Ausgangssignal A des Schaltkreises 23 gemäß Figur 5 ohne vorgeschaltete Analogfilterung direkt mit dem A/D-Konverter 37 abgetastet. Mittels eines im Mikrocontroller 31 hinterlegten Softwareprogramms als Tiefpassfilter oder auf der Grundlage der mathematischen Mittelwertbildung ist der Gleichspannungsanteil des Schaltkreissignals A gemäß Figur 5 berechenbar. Gleichzeitig ist die Spannung am Ausgang eines D/A-Konverters verändert, an die Arbeitspunktsteuerung AP des Schaltkreises 23 angeschlossen ist. Sobald ein bestimmter berechneter Grenzwert oder Gleichspannungswert erreicht ist, ist der Variationsverlauf der Spannung gestoppt. Der Schaltkreis 23 ist kalibriert.

Anschließend ist mittels der verwendeten Software die Tiefpassfilterung auf Hochpassfilterung umgeschaltet und damit sind die Gleichspannungsanteile unterdrückt. Der verwendete Algorithmus liefert folglich das erfasste Signal des Bewegungselementes 9, das anschließend mithilfe der verwendeten Software weiter ausgewertet werden kann, um Geschwindigkeit und Drehzahl des Bewegungselementes 9 zu ermitteln. Beispielsweise können mit dieser Methode auch anhand der Kurvenform mittels künstlicher Intelligenz Rückschlüsse über die Lage oder den aktuellen Zustand des Bewegungselementes 9 in der Führungsbahn 8 errechnet sein.

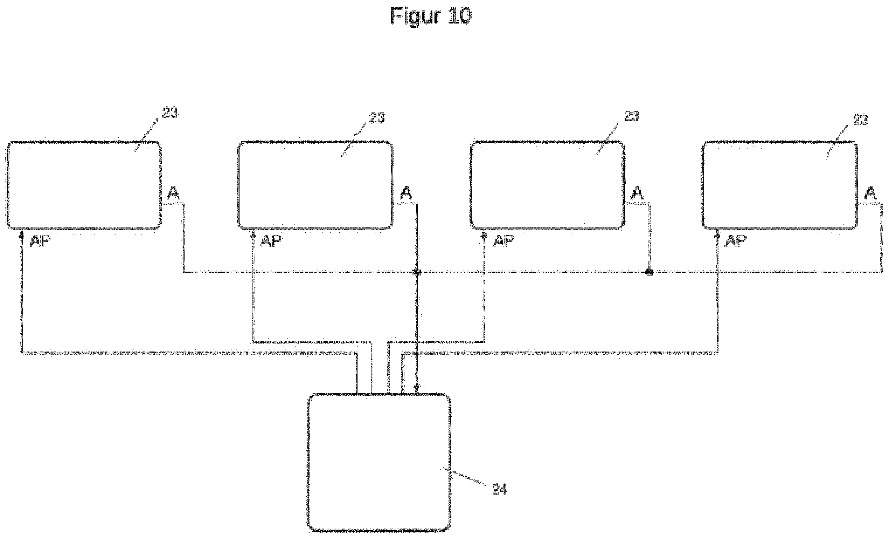

In Figur 10 ist der konstruktive Aufbau einer Schnittstelle zum Anschluss mehrerer Schaltkreise 23 zu entnehmen.

Da das erfindungsgemäße Schaltkreis-System an der Ringspinnmaschine 1 derart kostengünstig herstellbar sein soll, wie dies nur irgendwie erreichbar ist, sollten die einzelnen Schaltkreise 23 möglichst ohne weitere teure elektronische Komponenten auskommen. Daher kann die Regelung für alle verwendeten Schaltkreise 23 auf dem Motherboard 33 zusammengefasst sein. Zur Regelung des Arbeitspunktes AP und zur Auswertung der Signale sind mehrere Schaltkreise 23 an dem Mikrocontroller 31 anschließbar und können von diesem gesteuert sein. Alle am Motherboard 33 angeschlossenen Schaltkreise 23 können im Zeitschlitz-Verfahren nacheinander kalibriert sein, wie dies in den Figuren 7 bis 9 erläutert ist. Wegen des Open-Kollektor Ausgangs der Schaltkreise 23 können alle Ausgänge auf einem gemeinsamen A/D-Konverter 37 angeschlossen sein.

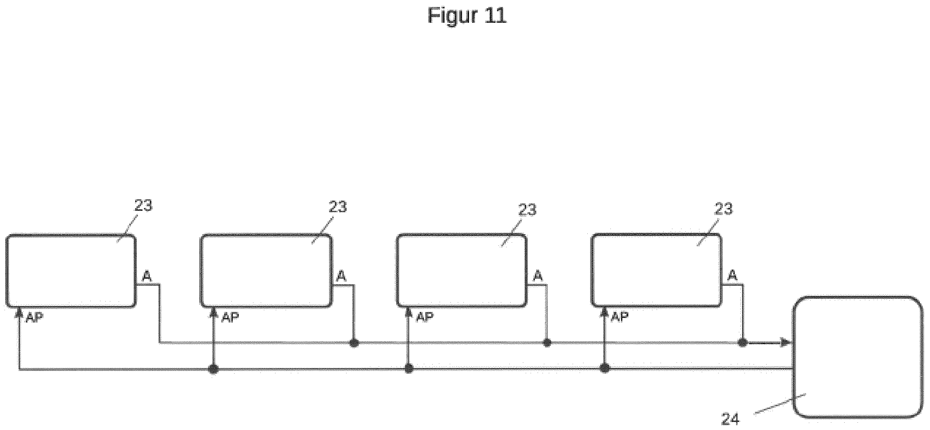

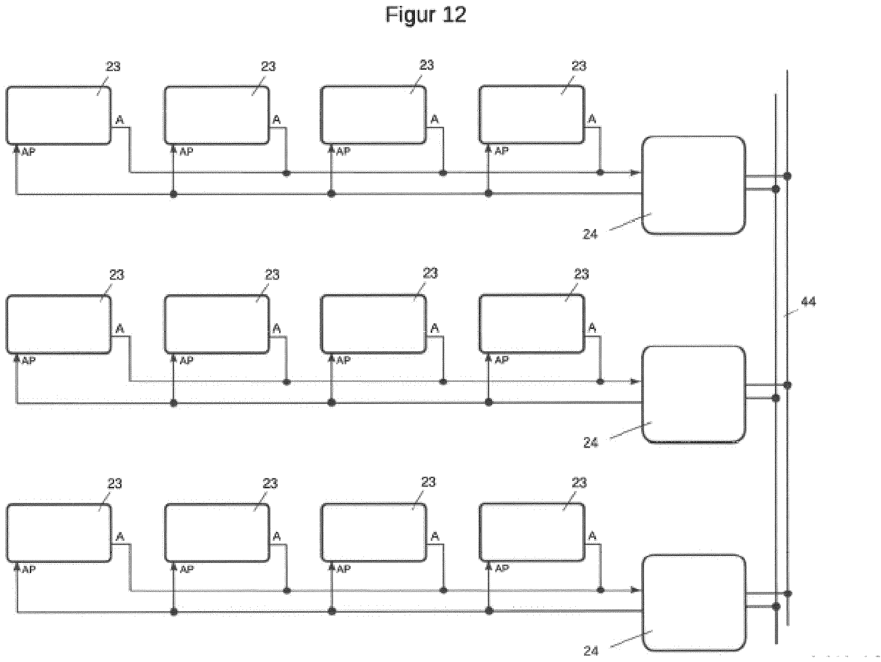

Durch Figur 11 ist eine BUS-Schnittstelle für den Schaltkreis 23 ersichtlich, wie dies beispielsweise in Figur 12 beispielhaft dargestellt ist. Sind nämlich die einzelnen Schaltkreise 23, beispielsweise acht davon, mit unterschiedlichen abgestuften Spannungsteiler R1/R2 aufgebaut, so weist jeder der Schaltkreise 23 einen anderen Arbeitspunkt AP auf. Damit lassen sich folglich mehrere Schaltkreise 23 und lediglich zwei Leitungen betreiben. Diese Maßnahme spart Kosten und die Schaltkreise 23 lassen sich mit geringerem Aufwand montieren. Eine Art Schienensystem mit zwei Schnittstellen-Leitern A und AP sind damit möglich, wobei die Spannungsversorgung "+" ebenfalls in diesem Leitungssystem integrierbar ist. Als gemeinsame Masse minus kann der Ringflansch 7 verwendet sein.

Aus Figur 12 ist der Mikrocontroller 31 an eine Industrie-Schnittstelle angeschlossen. Dies ist mit der Bezugsziffer 44 gekennzeichnet. Auf diese Weise ist der Schaltkreis 23 an ein Netzwerk und/oder an eine Cloud anschließbar. Die Daten von jeder Ringspinnstelle 17 sind folglich gemeinsam ausgewertet und mit anderen Maschinendaten oder auch miteinander vergleichbar.

## Patentansprüche

1. Elektrischer Schaltkreis (23) zur Detektion von elektrisch leitfähigen Gegenständen (9), bestehend aus mindestens zwei bestromten Spulen (L1, L2) mit mindestens einer Wicklung (22, ...22"), die durch den Schaltkreis (23) mit einer konstanten Frequenz angeregt sind, aus mindestens einem in dem Schaltkreis (23) angeordneten Transistor (T1 oder T2) und aus einem mit der jeweiligen Spule (L1, L2) des Schaltkreises (23) elektrisch verbundenen externen elektrischen Gerät (24), durch das das Schwingverhalten den Spulen (L1, L2) gemessen ist,
**dadurch gekennzeichnet, dass** der zu detektierende Gegenstand (9) als Modulator und der jeweilige Transistor (T1 oder T2) als Demodulator wirkt, dass der Gegenstand (9) durch eine Rotation des Gegenstands um eine Längsachse (6') im Nahbereich der Spulen (L1, L2) eine Amplitudenveränderung erzeugt, die von dem Schaltkreis (23) gemessen, verstärkt und an das elektrische externe Gerät (24) weitergeleitet ist und dass das elektrische Gerät (24) und die Spulen (L1, L2) an der Basis des Transistors (T1 oder T2) angeschlossen sind, derart, dass das Schwingverhalten der Spulen (L1, L2) mittels des elektrischen Gerätes (24) beeinflussbar und/oder einstellbar ist.
